Europäisches Patentamt

European Patent Office

Office européen des brevets

(19)

(11) Numéro de publication : **0 122 925**
**B1**

(12) **FASCICULE DE BREVET EUROPÉEN**

(45) Date de publication du fascicule du brevet :
09.07.86

(51) Int. Cl.⁴ : **B 65 G 53/20, C 25 C 3/14**

(21) Numéro de dépôt : **83903188.7**

(22) Date de dépôt : **18.10.83**

(86) Numéro de dépôt international :
**PCT/FR 83/00211**

(87) Numéro de publication internationale :
**WO/8401560 (26.04.84 Gazette 84/11)**

(54) DISPOSITIF CLOS A FLUIDISATION POTENTIELLE POUR LE CONVOYAGE DE MATERIAUX PULVERULENTS.

(30) Priorité : **22.10.82 FR 8217859**

(43) Date de publication de la demande :
**31.10.84 Bulletin 84/44**

(45) Mention de la délivrance du brevet :
**09.07.86 Bulletin 86/28**

(84) Etats contractants désignés :
**CH DE GB LI NL SE**

(56) Documents cités :
**US-A- 4 016 053**
**Materials Handling News, No. 257, October 1978,**
**"Pneumatic Handling", page 97**

(73) Titulaire : **ALUMINIUM PECHINEY**
**23, rue Balzac**
**F-75008 Paris (FR)**

(72) Inventeur : **HANROT, Jean-Pascal**
**7, La Clairmande La Mère de Dieu Brûlée**
**F-13100 Aix-en-Provence (FR)**
Inventeur : **VOLPELIERE, Jacky**
**Allée des Genêts Quartier Gassin**
**Mimet, F-13120 Gardanne (FR)**

(74) Mandataire : **Vanlaer, Marcel et al**
**PECHINEY 28, rue de Bonnel**
**F-69433 Lyon Cedex 3 (FR)**

## Description

L'invention concerne un dispositif clos à fluidisation potentielle pour le convoyage horizontal ou incliné de matériaux possédant les caractéristiques de pulvérulents fluidisables, depuis une zone de stockage jusqu'à au moins une zone à alimenter, éloignées l'une de l'autre.

L'invention concerne également un procédé continu de transport et d'alimentation de « capacités-réserves » en produit pulvérulent, comme de l'alumine par exemple, permettant d'alimenter un ensemble de conditionnement tel que ensacheuse, mise en conteneur, ou un ensemble de production tel que presse extrudeuse, cuves d'électrolyse ignée appartenant à un atelier, à partir d'une unique zone de stockage desdits matériaux.

Par matériaux fluidisables, on entend définir tous les matériaux bien connus de l'homme de l'art se présentant sous une forme pulvérulente, et de granulométrie et de cohésion telles que la vitesse de passage de l'air insufflé provoque, à vitesse faible, la décohésion des particules entre elles et la réduction des forces de frottement interne. De tels matériaux sont, par exemple, l'alumine destinée à l'électrolyse ignée, les ciments, plâtres, la chaux vive ou éteinte, cendres volantes, fluorure de calcium, charge d'apport pour caoutchouc, fécule, catalyseurs, poussières de charbon, sulfate de sodium, phosphates, polyphosphates, pyrophosphates, les matériaux plastiques sous la forme de poudre, les produits alimentaires tels que le lait en poudre, les farines, etc.

Il est bien connu que de telles technologies ont été étudiées et développées pour le transport en lit fluidisé de matériaux pulvérulents. Un exemple parmi d'autres est celui concernant l'alimentation en alumine des cellules d'électrolyse ignée pour la production de l'aluminium.

Pour ce faire, l'alumine, produit pulvérulent transporté et solubilisé dans le bain électrolytique, est progressivement consommée pendant que se déroule l'électrolyse et doit être remplacée au fur et à mesure de sa consommation, de telle manière que la concentration en alumine solubilisée soit maintenue dans les limites favorables pour le fonctionnement de la cellule à plein rendement. Dès lors, il devient nécessaire de régler la quantité d'alumine introduite dans la cuve d'électrolyse, de telle manière que son fonctionnement ne soit pas perturbé par un excès ou par un manque d'alumine.

De nombreux dispositifs ont été proposés par l'homme de l'art et décrits dans la littérature spécialisée, qui sont destinés à permettre une alimentation régulière de la cuve d'électrolyse en alumine. Un premier dispositif, décrit dans le brevet français 2 099 434, permet d'alimenter en alumine une cellule d'électrolyse et comprend un réservoir de stockage de l'alumine, au-dessous duquel se trouve un appareil de mesure permettant de régler la quantité d'alumine sortant du réservoir et, enfin, un moyen de transport fluidisé de l'alumine, encore connu sous l'appellation d'aéroglissière, placé entre l'appareil de mesure et la cellule à alimenter, le réservoir d'alumine et l'appareil de mesure étant placés, latéralement, à côté de la cellule. Le moyen de transport est lui-même muni de tuyauteries de sorties permettant d'alimenter la cellule en plusieurs points par l'intermédiaire de tubes plongeurs animés d'un mouvement de « monte et baisse », débitant chacun sensiblement la même quantité d'alumine.

Mais, un tel dispositif présente des inconvénients majeurs pour son exploitation industrielle. En effet, un tel dispositif est conçu d'une manière telle qu'il ne peut alimenter qu'une seule cuve d'électrolyse, alors qu'il est nécessaire d'alimenter une série de cuves d'électrolyse comportant par exemple 60 unités. En outre, ce dispositif est muni d'un réservoir éloigné de l'unique cuve qu'il peut alimenter et, dès lors, crée un temps de réponse important entre la sollicitation en matériaux pulvérulents et l'alimentation de la cuve d'électrolyse avec ledit matériau. De plus, ce dispositif est muni de plusieurs points d'introduction du matériau pulvérulent dans la cuve d'électrolyse, qui ne garantissent pas l'égalité de la quantité de matériau pulvérulent introduite en chaque point.

En plus des inconvénients précités, comme l'appareil de mesure est placé en amont de l'aéroglissière, le pulvérulent à transporter est totalement fluidisé et il se crée alors, entre la surface supérieure du lit fluidisé en mouvement et le plafond de l'aéroglissière, une couche gazeuse circulant à haute vitesse, entraînant avec elle les particules les plus fines du pulvérulent transporté. En outre, comme l'aéroglissière est démunie de moyens d'évacuation de la phase gazeuse, la totalité de l'air de fluidisation est introduite dans la cuve d'électrolyse, simultanément avec l'alumine, accroissant ainsi les envolements de particules les plus fines au niveau de la cuve d'électrolyse.

Le problème auquel se heurte l'homme de l'art est celui du transport à longue distance d'un matériau pulvérulent, emmagasiné dans un silo de très grande capacité en vue d'alimenter des ateliers de conditionnements se trouvant éloignés de plusieurs centaines de mètres dudit silo, problème qu'il a résolu jusqu'à présent par l'usage, par exemple, de conteneurs mobiles, de transport pneumatique à haute pression ou de transporteur mécanique.

Plus récemment, un autre dispositif d'alimentation en alumine d'une cellule d'électrolyse en de multiples points, a été décrit dans le brevet US. 4 016 053. Ce dispositif, qui permet de transporter un matériau pulvérulent d'une zone de stockage à une zone de consommation, comprend tout d'abord un convoyeur primaire à lit fluidisé, muni des moyens d'alimentation et d'évacuation du gaz utilisé pour fluidiser et transporter les matériaux pulvérulents provenant de la zone de stockage et à maintenir le convoyeur primaire essentiellement plein de matériaux fluidisés, puis comprend une pluralité de convoyeurs d'alimentation et d'évacuation du gaz utilisé pour fluidiser et transporter les matériaux pulvérulents provenant du convoyeur primaire et maintenir les convoyeurs secondaires continuellement pleins de matériaux pulvérulents fluidisés, enfin, comprend des dispositifs d'alimentation discontinue en matériaux pulvérulents de chaque cuve d'électrolyse par gravité, chaque dispositif étant alimenté par l'intermédiaire de l'un des convoyeurs secondaires à lit fluidisé.

Or, et cela est un inconvénient majeur, le dispositif décrit dans le brevet US 4 016 053 doit maintenir le matériau pulvérulent en état de fluidisation permanent, que la cellule d'électrolyse ait nécessité d'être alimentée ou non et, de ce fait, consomme des quantités importantes de gaz de fluidisation et, corrélativement, d'énergie.

De plus, et cela est un autre inconvénient majeur, pour que les matériaux pulvérulents présents dans ce dispositif restent dans un état permanent de fluidisation, il existe, entre la face supérieure du lit fluidisé et le plafond de l'aéroglissière, une veine gazeuse qui se déplace à grande vitesse et d'une manière permanente vers les évents d'évacuation en entraînant hors du dispositif jusqu'à 10 % en poids du débit du pulvérulent présent dans l'aéroglissière.

Dans la revue américaine « Materials Handling News n° 257 d'octobre 1978 — p. 97 » est décrit un dispositif combinant la gravité et la fluidisation en lit dense de matériaux pulvérulents permettant de limiter notablement les pertes de matière par entraînement aux évents, tout en assurant le transport et le déchargement en continu ou en discontinu d'un matériau pulvérulent en plusieurs points simultanément. Dans sa version la plus élaborée (fig. 6 choke-fed-air-activated gravity conveyor), le dispositif est un convoyeur clos et incliné dont le canal supérieur de circulation du matériau pulvérulent fluidisé, équipé d'une mise à l'air dont l'ouverture est réglée par une valve, est complètement rempli par le matériau fluidisé en phase dense alors que le canal de circulation du gaz de fluidisation en-dessous de la paroi poreuse est fractionné en plusieurs compartiments dans lesquels le débit est réglé par des valves. Le transport du matériau s'y fait aussi par gravité en inclinant le convoyeur pour mettre le produit en mouvement.

Ainsi, les dispositifs décrits dans l'art antérieur ne peuvent pleinement satisfaire l'utilisateur car ils se révèlent d'application industrielle complexe et onéreuse pour les consommations d'énergie qu'ils exigent, par exemple dans le cas des dispositifs à chargement-déchargement, des systèmes à transport pneumatique, ou encore par les pertes de matériaux pulvérulents qu'ils provoquent, ou par la mise en œuvre de moyens mécaniques auxiliaires importants : valves pilotées, chariots, engins, ponts roulants, trémies mobiles etc.

C'est pourquoi, la demanderesse, poursuivant ses recherches en ce domaine, a mis au point un dispositif de transport en lit dense de matériaux pulvérulents, exempt des inconvénients précités.

Le dispositif clos, selon l'invention, à fluidisation potentielle, pour le convoyage de matériaux pulvérulents, depuis une zone de stockage jusqu'à au moins une zone à alimenter qui comprend entre ces deux zones au moins un convoyeur muni de moyens de fluidisation constitués par un canal inférieur de circulation de gaz, un canal supérieur à circulation du matériau pulvérulent et du gaz, une paroi poreuse séparant lesdits canaux sur toute leur longueur, et au moins une tubulure d'alimentation en gaz du canal inférieur permettant d'établir une pression de fluidisation Pf, le matériau pulvérulent remplissant complètement le canal supérieur du convoyeur et le canal supérieur étant muni d'au moins une colonne, dite d'équilibrage, dont le rapport de la surface minimale « $\sigma$ » de la section droite à la surface totale S de la paroi poreuse est au moins égal à 1/200 (voir la revue « Material Handling News » déjà citée), est caractérisé en ce que la ou les colonne(s) communique(nt) librement et directement avec l'atmosphère, en ce que le convoyeur peut être horizontal ou incliné, et en ce que le canal inférieur est alimenté sur toute sa longueur en gaz sous pression Pf, de telle sorte que le matériau pulvérulent remplissant complètement le canal supérieur est fluidisé potentiellement.

Pour bien comprendre la fluidisation potentielle apparaissant dans le cadre de l'invention, il est utile de rappeler ce qu'est la fluidisation, habituellement pratiquée dans l'art antérieur pour le convoyage de matériaux pulvérulents.

Selon l'art antérieur, tel qu'il peut apparaître, par exemple dans le brevet US 4 016 053 précité, le gaz de fluidisation est introduit sous une pression donnée Pf au-dessous de la paroi poreuse de fluidisation séparant le canal inférieur à circulation de gaz et le canal supérieur à circulation du matériau pulvérulent d'un convoyeur horizontal. Le gaz de fluidisation traverse ladite paroi poreuse, puis passe entre les particules au repos du matériau pulvérulent formant la couche à fluidiser. L'épaisseur de ladite couche au repos est très inférieure à la hauteur du canal supérieur dudit convoyeur.

Dès lors que la vitesse de circulation du gaz dans l'espace interstitiel existant entre les particules est suffisamment élevée, lesdites particules sont mobilisées puis soulevées, chacune d'entre elles perdant les points de contact permanent avec ses voisines. Par ce moyen, les frottements internes entre particules sont réduits et ces particules sont mises dans un état de suspension dynamique. Dès lors, chaque particule sollicitée est soumise à une force ascensionnelle due à la vitesse du gaz en contact avec ladite particule, vitesse qui est de l'ordre de celle de la chute dans l'air de cette particule.

De ce fait, il en résulte une augmentation du volume initial du matériau pulvérulent et, corrélativement, une diminution de la densité apparente.

Selon l'invention, le matériau pulvérulent, en dehors de toute injection de gaz de fluidisation, remplit complètement le dispositif de convoyage, en particulier le canal supérieur de circulation du matériau pulvérulent du convoyeur horizontal ou incliné. Les particules au repos du matériau pulvérulent forment une couche dudit matériau à transporter, dont l'épaisseur est pratiquement égale à la hauteur dudit canal supérieur. Dès lors que le gaz est introduit au-dessous de la paroi poreuse de fluidisation, qui sépare le canal inférieur à circulation de gaz du canal supérieur à circulation du matériau pulvérulent, et ce, sous la même pression Pf que celle qui serait pratiquée dans l'art antérieur pour fluidiser le matériau pulvérulent, la colonne d'équilibrage est remplie de ce même matériau selon une hauteur manométrique qui équilibre la pression Pf et interdit l'accroissement des interstices entre les particules. De ce fait, la présence de la colonne d'équilibrage interdit la fluidisation du matériau pulvérulent présent dans le convoyeur horizontal ou incliné, comme la demanderesse a pu le constater lors de ses nombreuses expérimentations. En outre, comme la distance interstitielle entre les particules n'augmente pas, la perméabilité du milieu au gaz introduit sous la pression Pf est très faible et limite l'écoulement gazeux à une très petite valeur, par la section de la colonne d'équilibrage. Ainsi, et pour illustrer le phénomène observé par la demanderesse, le matériau pulvérulent à transporter, par exemple de l'alumine, étant soumis à une pression de fluidisation Pf de 80 millibars, dans le cas de l'art antérieur tel qu'il peut apparaître par exemple dans l'US-P- 4 016 053, le débit de gaz en circulation correspondant à ladite pression Pf et provoquant la fluidisation du matériau pulvérulent est de l'ordre de $33.10^{-3}$ m$^3 \cdot$ m$^{-2} \cdot$ s$^{-1}$, alors que, dans le cas de l'invention et pour la même pression Pf, le débit de gaz en circulation est seulement de l'ordre de $4.10^{-3} \cdot$ m$^3 \cdot$ m$^{-2} \cdot$ s$^{-1}$ débit trop faible pour pouvoir provoquer la fluidisation de l'alumine dans l'ensemble du convoyeur.

La colonne d'équilibrage selon l'invention est préférentiellement verticale. Elle peut être montée dans l'axe du convoyeur, ou placée latéralement et raccordée à la partie supérieure dudit convoyeur par tout moyen approprié. La colonne d'équilibrage est généralement tubulaire et sa section par un plan perpendiculaire à son axe peut être circulaire, elliptique ou polygonale.

En multipliant ses recherches et en conduisant ses expérimentations pour mettre au point le dispositif selon l'invention, la demanderesse a été amenée à constater et à établir que les divers paramètres techniques de la colonne d'équilibrage, ainsi que les nombreux paramètres attachés au matériau pulvérulent à transporter, étaient associés dans des relations permettant de définir la surface minimale σ totale que doit avoir la ou les sections droites des colonnes, déterminée en proportion de la surface totale de la paroi poreuse : S.

C'est ainsi que, pour un dispositif à fluidisation potentielle de transport de matériau pulvérulent selon l'invention, comportant une zone de stockage, au moins un convoyeur clos horizontal ou incliné et au moins une colonne d'équilibrage, dudit convoyeur, pour une pression de gaz de fluidisation Pf et une surface totale S de la paroi poreuse, la surface minimale totale « σ » de la section droite de la ou des colonnes d'équilibrage doit répondre à la relation :

$$\sigma \geqslant S/200$$

Préférentiellement, la surface minimale totale « σ » est choisie dans les limites suivantes, qui ont été déterminées expérimentalement :

$$S/200 \leqslant \sigma \leqslant S/20$$

Dans le cas particulier de l'alumine, la demanderesse a été amenée à constater expérimentalement que la surface minimale totale σ, que doit avoir la section droite de la ou des colonnes d'équilibrage, doit être au moins égale à S/100 et, de préférence, comprise entre S/100 et S/50.

La hauteur de la colonne d'équilibrage doit être au moins égale à la valeur extraite de la relation d'équilibre :

$$Pf = H._{\rho}$$

dans laquelle ρ est le poids spécifique du matériau pulvérulent présent dans ladite colonne, tandis que Pf est la pression de gaz de fluidisation.

D'une manière générale, l'appareillage selon l'invention est muni d'une colonne d'équilibrage mais, dans le cas où le convoyeur à lit fluidisé est particulièrement long, il peut être intéressant de munir ledit convoyeur d'au moins deux colonnes d'équilibrage.

La colonne d'équilibrage selon l'invention s'applique sans aucune restriction à toute installation de transport de matériaux pulvérulents à fluidisation potentielle, d'une zone de stockage vers une zone de consommation, comprenant un convoyeur primaire à fluidisation potentielle alimentant une pluralité de convoyeurs secondaires à fluidisation potentielle, indépendant les unes des autres, chaque convoyeur secondaire à fluidisation potentielle alimentant une pluralité de convoyeurs tertiaires à fluidisation potentielle, indépendant les uns des autres, chaque convoyeur tertiaire alimentant la zone de consommation par l'intermédiaire d'un dispositif de stockage adapté. En d'autres termes, la colonne d'équilibrage selon l'invention s'applique avec succès à un ensemble de convoyeurs à fluidisation potentielle montée en cascade.

L'invention sera mieux comprise grâce à la description non limitative des figures 1, 2 et 3, illustrant un mode de fonctionnement et une application industrielle du dispositif.

La figure 1 est une vue simplifiée en coupe verticale du dispositif selon l'invention, comportant un seul convoyeur horizontal et montrant le matériau pulvérulent dans un état de repos, bien que le gaz inclus soit maintenu à une pression de fluidisation potentielle.

La figure 2 est une vue simplifiée en coupe verticale du dispositif selon l'invention, comportant un seul convoyeur horizontal et montrant le matériau pulvérulent dans une phase dynamique, c'est-à-dire alimentant une zone de consommation éloignée de la zone de stockage.

La figure 3 est une vue en perspective, avec des zones d'observation partiellement déchiquetées, d'une installation complète de convoyage selon le dispositif de l'invention.

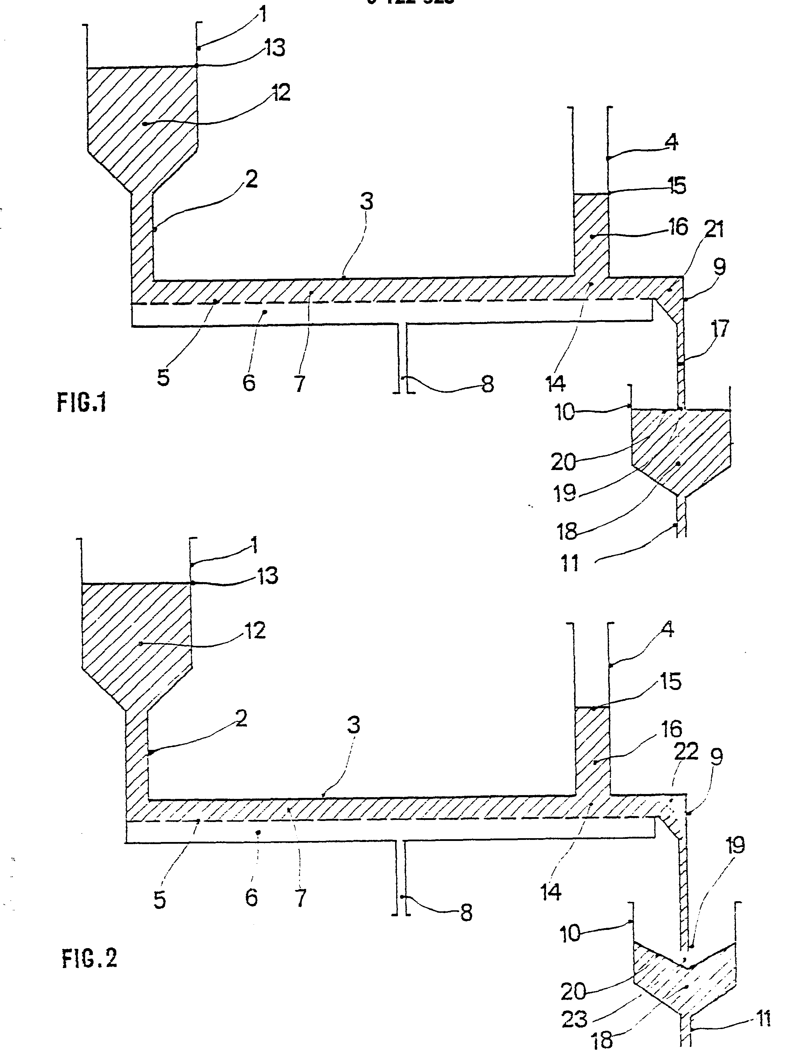

Selon les figures 1 et 2, le dispositif clos de fluidisation potentielle pour le convoyage horizontal ou incliné d'un matériau pulvérulent, se compose d'un réservoir de stockage aérien (1) du matériau à transporter relié par une canalisation (2) à un convoyeur (3) du type aéroglissière à fluidisation, d'une colonne d'équilibrage (4), d'un moyen d'évacuation (9) du convoyeur, d'un réservoir de stockage (10) du matériau transporté, destiné à être consommé par l'intermédiaire du moyen (11).

Le réservoir de stockage aérien (1) contient le matériau pulvérulent (12) en vrac, soumis à la pression atmosphérique. Ce réservoir est en charge sur l'une des extrémités du convoyeur horizontal (ou incliné) (3) par l'intermédiaire de la canalisation (2). Le convoyeur (3), longiligne, se compose d'une paroi poreuse (5) de fluidisation ayant une surface totale S séparant le canal inférieur à circulation de gaz (6) et le canal supérieur (7) à circulation du matériau pulvérulent. Près de l'autre extrémité du convoyeur horizontal (3), se trouve une colonne d'équilibrage (4) dont la surface minimale totale $\sigma$ de la section doit être au moins égale à $S/200$ tandis que, à cette autre extrémité opposée au réservoir de stockage (1), se trouve un moyen d'évacuation (9) qui transforme le mouvement horizontal du matériau pulvérulent en un mouvement vertical permettant d'alimenter un réservoir de stockage du matériau transporté, situé en contre-bas du convoyeur horizontal (3). Le réservoir de stockage (10) du matériau transporté alimente à son tour une zone de consommation (non représentée) du matériau par l'intermédiaire du moyen (11).

La comparaison des figures 1 et 2 permet de décrire le mouvement des fluides gazeux et matériaux pulvérulents.

Selon la figure 1, le matériau pulvérulent occupe, en vrac, l'ensemble du dispositif de convoyage selon l'invention, exprimant ainsi que le poids spécifique apparent du matériau pulvérulent remplissant le dispositif dans les zones 12, 7, 14, 16, 21, 17 et 18, est le même que celui dudit matériau stocké en tas à la pression atmosphérique. Le niveau supérieur du matériau pulvérulent présent dans le réservoir (1) doit toujours être au-dessus du niveau supérieur atteint par le matériau pulvérulent dans la colonne d'équilibrage (4) quand le dispositif est soumis à une pression de gaz Pf. Dès lors que l'on applique, par l'intermédiaire de la canalisation (8), une pression de gaz Pf, au-dessous de la paroi poreuse (5), pression identique à celle que l'on appliquerait dans une aéroglissière à lit fluidisé, le matériau pulvérulent à transporter occupe la colonne d'équilibrage (4) jusqu'au niveau (15) selon une hauteur manométrique qui équilibre la pression de gaz Pf. Comme le réservoir de stockage (10) est suffisamment rempli du matériau pulvérulent transporté, la sortie (19) du moyen d'évacuation (9) est immergée dans la zone (20) du matériau pulvérulent (18). L'équilibre qui en résulte est maintenu dans l'état tant que la demande par la canalisation (11) du matériau à consommer ne provoque pas le dégagement de la sortie (19) par l'abaissement du niveau (20).

Selon la figure 2, la consommation du matériau pulvérulent, stocké dans le réservoir (10) est telle que le niveau (20) dudit matériau se situe au-dessous de la sortie (19). Dès lors que cette sortie (19) est libérée, il se produit un échappement du matériau pulvérulent par le moyen d'évacuation (9) et la sortie (19) grâce à la décompression du gaz inclus dans la zone (22) du convoyeur (3), la plus proche de la zone de consommation en aval de (11) (non représentée). Dès que la zone de consommation a reçu la quantité souhaitée de pulvérulent, la sortie (19) est à nouveau obturée en recréant les conditions d'équilibre de la fig. 1. La zone (22) est alors réalimentée en pulvérulent par éboulement de proche en proche, de l'aval vers l'amont, jusqu'au silo 1.

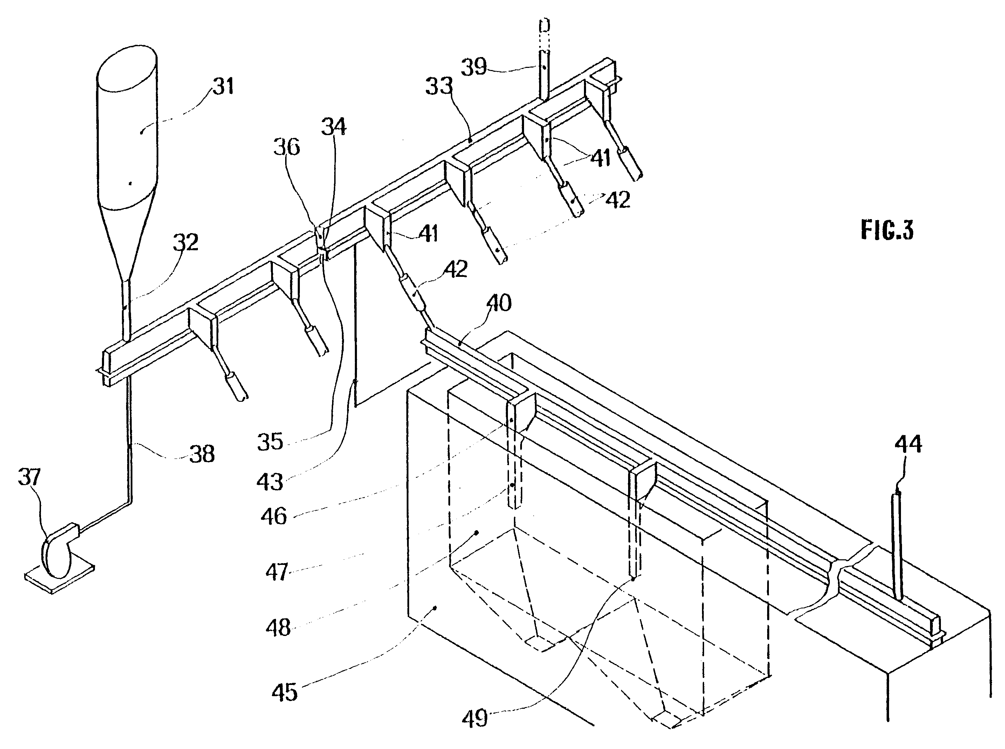

La figure 3 représente une installation d'alimentation en alumine d'une série de cellules électrolytiques de production de l'aluminium. Dans une cellule d'électrolyse ignée de l'alumine, il est nécessaire d'alimenter régulièrement le bain fondu en alumine au fur et à mesure de la consommation dans le temps par une zone de stockage placée au-dessus de chaque cellule qui alimente le bain à partir de plusieurs points.

Le dispositif clos, selon l'invention, de convoyage de l'alumine d'une zone de stockage à au moins une zone de consommation, comporte les moyens décrits ci-après :

Un réservoir aérien (31) d'alumine de plus ou moins grande capacité selon les besoins, éloigné de l'atelier d'électrolyse, est placé en un point du site industriel facilement accessible pour en permettre son alimentation par conteneur routier ou ferroviaire, ou tout autre moyen de manutention. Ce réservoir aérien (31) est relié par gravité à un convoyeur primaire (33) au moyen de la canalisation (32). Le premier convoyeur primaire (33), à fluidisation potentielle, dont la longueur est équivalente à celle de la partie de l'atelier d'électrolyse à alimenter, se compose d'une paroi poreuse (34), d'une surface totale $S_1$ séparant le canal inférieur à circulation de gaz (35) et le canal supérieur (36) à circulation du matériau pulvérulent. Le canal inférieur (35) à circulation de gaz est alimenté par l'intermédiaire du ventilateur (37) et de la canalisation (38). Le canal supérieur (36) est muni d'au moins une colonne d'équilibrage (39) dont la surface minimale totale $\sigma_1$ de la section doit être au moins égale à $S_1/100$. Ce convoyeur primaire (33) est relié à des convoyeurs secondaires (40) à fluidisation potentielle, grâce aux piquages latéraux (41) et aux canalisations (42). Les convoyeurs secondaires (40) à fluidisation sont du même type que le convoyeur primaire (33) à fluidisation potentielle. Ils sont alimentés en gaz par les canalisations (43) reliant le canal inférieur (35) à circulation de gaz du convoyeur primaire (33), aux canaux inférieurs à circulation de gaz des convoyeurs secondaires (40) à fluidisation potentielle. Chaque convoyeur secondaire (40) peut être muni d'une colonne d'équilibrage (44). Chaque convoyeur secondaire (40) s'étend longitudinalement au-dessus d'une cuve d'électrolyse, schématisée par (45). Des piquages latéraux (46) alimentent en alumine des tubes plongeurs (47) qui déversent le matériau pulvérulent dans des réservoirs de stockage (48) placés au-dessus de chaque cuve d'électrolyse. Ces réservoirs de stockage (48) sont munis éventuellement de moyens d'obturation (non représentés), de leur sortie, commandés par la cellule d'électrolyse. De même, l'extrémité (49) des tubes plongeurs peut être munie de moyen d'obturation asservi à l'alimentation de la cuve d'électrolyse, ou encore peut être obturée par l'augmentation du niveau d'alumine dans le réservoir (48).

Exemple (selon la figure 3)

On a réalisé un dispositif de convoyage d'alumine à fluidisation potentielle selon l'invention, qui a permis d'alimenter en ce matériau pulvérulent 16 cuves d'électrolyse ignée consommant journalièrement 1 T/cuve/24 h d'alumine pendant une période de 600 jours. Le réservoir de stockage (31) avait une capacité de 100 m³ et contenait en moyenne 60 tonnes d'alumine. Il alimentait par gravité un convoyeur primaire à fluidisation potentielle à raison de 0,7 tonne à l'heure. Le convoyeur primaire (33) à fluidisation potentielle avait une longueur totale de 80 mètres et était alimenté en alumine par le réservoir (31) aérien. Ce convoyeur avait une hauteur de 0,35 m, une largeur de 0,12 m et offrait une surface $S_1$ de paroi poreuse égale à 10 m².

Le canal (35) à circulation de gaz du convoyeur primaire était alimenté par le ventilateur (37) à raison de 150 m³/heure sous une pression Pf égale à 0,08 bar.

Le convoyeur primaire (33) à fluidisation potentielle était muni de 5 colonnes d'équilibrage (39). Chaque colonne d'équilibrage avait une hauteur de 2 mètres et une surface de section horizontale égale à 0,03 m².

Le convoyeur primaire (33) à fluidisation potentielle était muni de 16 piquages latéraux (41), chaque piquage (41) alimentant par gravité un convoyeur secondaire (40) à fluidisation potentielle à raison de 1 T/cuve/24 heures d'alumine.

Chaque convoyeur secondaire (40) à fluidisation potentielle avait une longueur de 6 m, une hauteur de 0,25 m et une largeur de 0,06 m. Il offrait une surface de paroi poreuse égale à 0,4 m², qui était alimentée en gaz par le ventilateur (37) à raison de 6 m³/heure sous une pression Pf égale à 0,08 bar.

Chaque convoyeur secondaire (40) était muni de 2 piquages latéraux alimentant en alumine des réservoirs de stockage (48) par l'intermédiaire de tubes plongeurs (47).

Chaque réservoir de stockage, qui se trouvait au-dessus de la cuve d'électrolyse qu'il alimentait, avec une capacité de 1,2 m³ et contenait en moyenne 1 T d'alumine.

Quand l'alumine présente dans chaque réservoir (48) l'était en excès, l'extrémité (49) du tube plongeur (47) était naturellement obturée. Par contre, quand l'alumine présente dans chaque réservoir (48) l'était par défaut, l'extrémité (49) du tube plongeur (47) était dégagée et le dispositif selon l'invention alimentait en alumine le réservoir de stockage (48).

Le dispositif de convoyage selon l'invention consommait 1,3 KWh pour un débit de gaz de 250 m³/h par tonne d'alumine transportée alors que, selon l'art antérieur, le même dispositif, démuni de colonne d'équilibrage, aurait nécessité 10,0 KWh pour un débit de gaz de 2 000 m³/h par tonne d'alumine transportée.

**Revendications**

1. Dispositif clos, à fluidisation potentielle, pour le convoyage de matériaux pulvérulents, depuis une zone de stockage (31) jusqu'à au moins une zone à alimenter (45) qui comprend entre ces deux zones au moins un convoyeur (33) muni de moyens de fluidisation constitués par un canal inférieur (35) de circulation de gaz, un canal supérieur (36) à circulation du matériau pulvérulent et du gaz, une paroi poreuse (34) séparant lesdits canaux sur toute leur longueur, et au moins une tubulure (38) d'alimentation en gaz du canal inférieur (35) permettant d'établir une pression Pf, le matériau pulvérulent remplissant complètement le canal supérieur (36) du convoyeur (33) et le canal supérieur (36) étant muni d'au moins une colonne (39), dite d'équilibrage, dont le rapport de la surface minimale « σ » de la section droite à la surface totale S de la paroi poreuse et au moins égal à 1/200, caractérisé en ce que la ou les colonne(s) (39) communique(nt) librement et directement avec l'atmosphère, en ce que le convoyeur (33) peut être horizontal ou incliné, et en ce que le canal inférieur (35) est alimenté sur toute sa longueur en gaz sous pression Pf, de telle sorte que le matériau pulvérulent remplissant complètement le canal supérieur (36) est fluidisé potentiellement.

2. Dispositif clos, à fluidisation potentielle pour le convoyage de matériaux pulvérulents selon la revendication 1, caractérisé en ce que la colonne (39) d'équilibrage est montée verticalement dans l'axe du convoyeur.

3. Dispositif clos, à fluidisation potentielle,

pour le convoyage de matériaux pulvérulents, selon la revendication 1, caractérisé en ce que la colonne (39) d'équilibrage est placée latéralement au convoyeur (33) et lui est raccordé à la partie supérieure (36) par tout moyen approprié.

4. Dispositif clos à fluidisation potentielle pour le convoyage de matériaux pulvérulents, selon l'une quelconque des revendications 1 à 3, caractérisé en ce que dans le cas de l'alumine, le rapport de la surface minimale « σ » de la section droite de la ou des colonnes d'équilibrage (39) de la surface totale de la paroi poreuse (34) est compris entre 1/100 et 1/50.

## Claims

1. A closed apparatus providing potential fluidisation, for conveying powder materials from a storage region (31) to at least one region (45) to be supplied, which comprises between said two regions at least one conveyor (33) provided with fluidisation means formed by a lower gas flow duct (35), an upper duct (36) for flow of the powder material and the gas, with a porous wall (34) separating said ducts over the entire length thereof, and at least one pipe (38) for supplying the lower duct (35) with gas, for establishing a pressure Pf, the powder material completely filling the upper duct (36) of the conveyor (33) and the upper duct (36) being provided with at least one column (39) for balancing purposes in which the ratio of the minimum area « σ » of the cross-section to the total area S of the porous wall is at least equal to 1/200, characterised in that the column or columns (39) communicate freely and directly with the atmosphere, that the conveyor (33) may be horizontal or inclined, and that the lower duct (35) is supplied with gas under a pressure Pf, over its entire length, in such a way that the power material which completely fills the upper duct (36) is potentially fluidised.

2. A closed, potential-fluidisation apparatus for conveying powder materials, according to claim 1, characterised in that the balancing column (39) is mounted vertically on the axis of the conveyor.

3. A closed, potential-fluidisation apparatus for conveying powder materials, according to claim 1, characterised in that the balancing column (39) is positioned laterally with respect to the conveyor (33) and is connected thereto in the upper part (36) by any suitable means.

4. A closed, potential-fluidisation apparatus for conveying powder materials, according to any one of claims 1 to 3, characterised in that, in the case of alumina, the ratio of the minimum area « σ » of the cross-section of the balancing column or columns (39) to the total area of the porous wall (34) is between 1/100 and 1/50.

## Patentansprüche

1. Geschlossene Vorrichtung mit potentieller Fluidisierung zur Förderung von pulverförmigen Materialien von einer Vorratszone (31) zu wenigstens einer zu speisenden Zone (45), mit wenigstens einem zwischen diesen beiden Zonen angeordneten Förderer (33), der folgendes aufweist : eine Fluidisierungseinrichtung, die aus einem Kanal (35) zur Zirkulation von Gas besteht, einen oberen Kanal (36) zur Zirkulation von pulverförmigen Material und von Gas, eine poröse Wand (34), die die Kanäle auf ihrer gesamten Länge voneinander trennt, und wenigstens eine der Speisung des unteren Kanals (35) mit Gas dienende Rohrleitung (38), die den Aufbau eines Drucks Pf ermöglicht, wobei das pulverförmige Material den oberen Kanal (36) des Förderers (33) vollständig füllt und der obere Kanal (36) mit wenistens einer sogenannten Gleichgewichtssäule (39) versehen ist, deren Verhältnis der Mindestfläche « σ » des Querschnitts zur Gesamtfläche S der porösen Wand wenigstens gleich 1/200 ist, dadurch gekennzeichnet, daß die Säule(n) (39) in unmittelbarer Verbindung mit der Atmosphäre steht (stehen), daß der Förderer (33) waagrecht oder geneigt sein kann, und daß der untere Kanal (35) auf seiner gesamten Länge mit unter dem Druck Pf stehenden Gas derart gespeist wird, daß das den oberen Kanal (36) vollständig füllende pulverförmige Material potentiell fluidisiert wird.

2. Geschlossene Vorrichtung mit potentieller Fluidisierung zur Förderung von pulverförmigen Materialien nach Anspruch 1, dadurch gekennzeichnet, daß die Gleichgewichtssäule (39) in der Achse des Förderers senkrecht eingebaut ist.

3. Geschlossene Vorrichtung mit potentieller Fluidisierung zur Förderung von pulverförmigen Materialien nach Anspruch 1, dadurch gekennzeichnet, daß die Gleichgewichtssäule (39) seitlich vom Förderer (33) angeordnet ist und mit ihm am Oberteil (36) durch irgendwelche geeigneten Mittel verbunden ist.

4. Geschlossene Vorrichtung mit potentieller Fluidisierung zur Förderung von pulverförmigen Materialien nach einem der Ansprüche 1 bis 3, dadurch gekennzeichnet, daß im Fall von Aluminiumoxid das Verhältnis der Mindestfläche « σ » des Querschnitts der Gleichgewichtssäule(n) (39) zur Gesamtfläche der porösen Wand (34) zwischen 1/100 und 1/50 liegt.

FIG.1

FIG.2

FIG.3

0 122 925